# EUROPEAN PATENT APPLICATION

(11) **EP 4 722 562 A1**
(43) Date of publication of application: **08.04.2026**
(21) Application number: 23742347.0
(22) Date of filing: 31.05.2023
(51) Int. Cl.: F16H 13/08, F16H 13/14

(54) **EPICYCLIC TRACTION TRANSMISSION WITH FRUSTOCONICAL ROLLING ELEMENTS**

(71) Applicant: Arquimea Group S.A., 28850, Torrejón de Ardoz Madrid (ES)
(72) Inventor: MARTIN HERNÁNDEZ, Luis Daniel, 38320 San Cristóbal de la Laguna (Tenerife) (ES); LÓPEZ ESTÉVEZ, Miguel, 38320 San Cristóbal de la Laguna (Tenerife) (ES)
(74) Representative: Pons IP
(86) International application number: PCT/ES2023/070361
(87) International publication number: WO 2024/246377

(57) **Abstract**

Actuator comprising a solar roller (104), planetary rollers (102), auxiliary rollers (103) and a fixed crown (101), wherein the solar roller (104) is in the centre, the fixed crown (101) positioned externally to all the elements; the auxiliary rollers (103) are positioned between the planetary rollers (102) and the fixed crown (101) and the planetary rollers (102) make contact with the solar roller (104), the auxiliary rollers (103) and the fixed crown (101),
characterised in that the solar roller (104), the planetary rollers (102), the auxiliary rollers (103) and the fixed crown (101) all have a frustoconical or truncated cone geometry. A transmission is achieved that provides a simple method of varying the preload on the rolling contact elements, thus providing a means of improving the torque density and mechanical efficiency of the transmission.

## Description

### OBJECT OF THE INVENTION

The object of the present invention, as the title of the invention indicates, is an epicyclic traction transmission with truncated-conical rolling elements that allows the preload on the rolling contact elements to be varied, providing a means for improving the torque density and the mechanical efficiency of the transmission.

The present invention is characterised by the special design and configuration of each and every one of the elements that are part of the epicyclic gear so that it is possible to vary the preload on the rolling contact elements, which results in an improvement of the torque density and the mechanical efficiency of the transmission.

The present invention therefore falls within the scope of epicyclic gear transmissions or planetary gear transmissions.

### BACKGROUND OF THE INVENTION

Many systems use epicyclic gear transmissions or planetary gear transmissions (PGTs) due to their high mechanical efficiency and high torque density.

A key aspect limiting the use of traction units in some cases is their typically low specific torque, i.e. the output torque or maximum torque per unit mass, and their low torque density, torque output per unit volume. Substantial efforts and resources are being deployed in various industries to develop traction drives that have a torque density similar to planetary gear transmissions.

The lifetime of rolling contact components is greatly affected by the radii of the contact components. The design of compact traction units is therefore a challenge, since the smaller the radii of the rolling components, the higher the contact stresses and therefore the shorter the fatigue life of the transmission.

US 11473653 B2 is known in the state of the art and has a central roller acting as a sun, three planetary rollers and a series of auxiliary rollers in rolling contact with the hollow planets that transmit the orbital movement of the planets around the sun and the torque load to the planet carrier.

Unlike geared transmissions, the maximum shear stresses experienced by rolling contact components in epicyclic traction transmissions lubricated with a set preload vary only in the order of 3-5% with torque loading. For the epicyclic traction drive to operate, the preload must be configured so that the rollers transmit the given maximum torque without skidding. In practice, this means that for most of the operating environment of the traction transmission, the preload is higher than necessary, which results in a shorter useful life and reduced mechanical efficiency of the transmission.

To solve this problem, NASA and others have developed torque-dependent variable preload systems [1,2,3,4]. These mechanisms act as very rigid torsional springs, raising or lowering the preload in proportion to the torque transmitted by the device. These systems tend to require that the preload be applied in the axial direction, although one or two proposed designs claim mechanisms that apply the preload in a radial direction [5].
1. D. M. Williams and D. P. Kuban. (1989) Traction Drive Force Transmission For Telerobotic joints. NASA Technical Note.
2. Montgomery, M., & Sherill, R. (2020). US 10,539,210 B2 Angular Contact Ball Ramps for Driven Turbocharger.
3. Montgomery, M., & Sherill, R. (2010). US 10,655,711 B2 Single Angular ball ramp for driven Turbocharger.
4. Petersen, R., Mockel, J., Lutz, A., & Hanke, S. (2016). US 9,341,245 B2 Friction Roller Planetary Gearing and Speed-Changing and Differential gearing.
5. Chen, D., & Du, X. (2013). Development of self-adaptively loading for planetary roller traction-drive transmission. Journal of Chemical and Pharmaceutical Research, 5(9), 498-506.

Therefore, the object of the present invention is to overcome the drawbacks of the state of the art that avoids preloading systems where, in addition, the useful life and the mechanical efficiency of the transmission are not reduced, by developing an epicyclic traction transmission such as the one described below, the essence of which is contained in the first claim.

### DESCRIPTION OF THE INVENTION

The object of the present invention is essentially contained in the independent claim and the different embodiments are contained in the dependent claims.

The object of the present invention is an epicyclic traction transmission wherein the rolling contact elements have a shape such that the preload can be applied in the axial direction. In practical terms, this means that the rolling elements can be any combination of axisymmetric geometries whose contact zones are not aligned in parallel with the axis of the transmission, but come into contact at some angle, so that they can normally be loaded together by a resulting axial preload.

This key difference provides a simple method for varying the preload on the rolling contact elements, thereby providing a means for improving the torque density and mechanical efficiency of the transmission.

Although this topology brings with it certain improvements, it also opens up new problems. For example, to ensure that the planetary rolling elements maintain their alignment under the high preload, it is necessary to restrict them axially in some way. This is traditionally done in roller bearings by providing small flanges on each end of the inner and outer tracks that slide against the roller end faces to keep them in proper alignment. In a roller bearing where lubrication provides very low coefficients of friction, this results in a small and manageable loss of mechanical efficiency. In traction transmissions where the coefficient of friction provided by specialised traction lubricants can reach values around 2 orders of magnitude higher than in lubricated roller bearings, friction losses become nontrivial. Another problem that designers may encounter is that, for applications where positional accuracy is important, the use of a variable preload system can generate a source of mechanical play, especially when the direction of movement changes.

Unless indicated otherwise, all the technical and scientific elements used in this specification have the meaning usually understood by a person skilled in the art to which this invention belongs. In the practice of this invention, procedures and materials similar or equivalent to those described in the specification can be used.

In the description and claims, the word "comprises" and its variants do not intend to exclude other technical characteristics, additives, components or steps. For persons skilled in the art, other objects, advantages and characteristics of the invention will be partly inferred from the description and partly from the practice of the invention.

### EXPLANATION OF THE FIGURES

In order to complement the description being made herein, and with the object of aiding the better understanding of the characteristics of the invention, in accordance with a preferred practical embodiment thereof, said description is accompanied, as an integral part thereof, by a set of drawings where, in an illustrative and non-limiting manner, the following has been represented:
Figure 1 shows a front view of the epicyclic traction transmission.
Figure 2 shows the view of a diametrical section of the transmission.

### PREFERRED EMBODIMENT OF THE INVENTION

In view of the figures, a preferred embodiment of the proposed invention is described below.

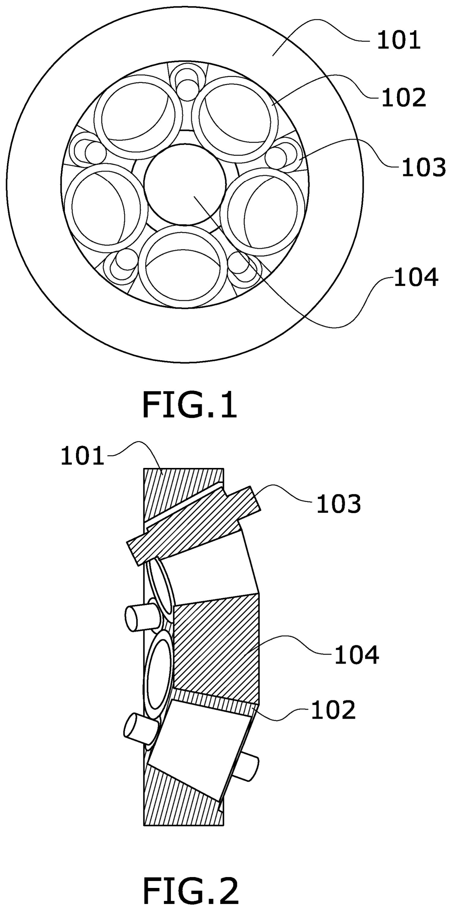

Figure 1 shows that it has a solar roller (104), planetary rollers (102), auxiliary rollers (103) and a fixed crown (101), where the solar roller (104) is in the centre; the fixed crown (101) is positioned externally to all the elements; the auxiliary rollers (103) are positioned between the planetary rollers (102) and the fixed crown (101) and the planetary rollers (102) make contact with the solar roller (104), the auxiliary rollers (103) and the fixed crown (101); the solar roller (104), the planetary rollers (102), the auxiliary rollers (103) and the fixed crown (101) all have a frustoconical trunk geometry or frustoconical shape.

Figure 2 shows more clearly how the cross-section of the solar roller (104), the planetary rollers (102), the auxiliary rollers (103) and the fixed crown (101) have a frustoconical section, all of which can be preloaded by a resulting axial preloading force.

The axles at either end of the tapered auxiliary rollers can be attached to a planet carrier by means of rolling bearings.

Therefore, the rollers are brought into contact with each other at some angle to their axis, so that they are preloaded by the axial resultant force, which allows the preload of the different rollers to be varied.

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. Epicyclic traction transmission comprising a solar roller (104), planetary rollers (102), auxiliary rollers (103) and a fixed crown (101), where the solar roller (104) is in the centre; the fixed crown (101) is positioned externally to all the elements; the auxiliary rollers (103) are positioned between the planetary rollers (102) and the fixed crown (101) and the planetary rollers (102) make contact with the solar roller (104), the auxiliary rollers (103) and the fixed crown (101),
**characterised in that** the solar roller (104), the planetary rollers (102), the auxiliary rollers (103) and the fixed crown (101) all have a frustoconical or truncated cone geometry.

2. Epicyclic traction transmission according to Claim 1, **characterised in that** the axles at either end of the auxiliary rollers (103) are connected to a planet carrier by means of roller bearings.
